# EUROPEAN PATENT APPLICATION

(11) **EP 1 282 049 A2**
(43) Date of publication of application: **05.02.2003**
(21) Application number: 02250169.6
(22) Date of filing: 10.01.2002
(51) Int. Cl.: G06F 17/30

(54) **System and method for providing summary video information of video data**

(30) Priority: 31.07.2001 KR 2001042490
(71) Applicant: SAMSUNG ELECTRONICS CO., LTD., Suwon-City, Kyungki-do (KR)
(72) Inventor: Kim, Sung-joo, Seoul (KR)
(74) Representative: Robinson, Ian Michael

(57) **Abstract**

Disclosed is a system for providing summary video information of video data including an editing tool server which makes a video title list for many video data, and edits the summary video information of each video data corresponding to the video title list and extracts the summary video information according to a requesting signal, a preview encoder which provides a retrieving menu for the video title list to an external device connected to receive the video data, and properly align the summary video information for at least one of the video data on a screen or reprocesses the summary video information to be suitable for streaming thereof when a retrieving operation is requested through the retrieving menu, and a stream server which transmits the extracted video title list and the summary video information to the external device, when an output-requesting signal for the summary video information of the video data extracted from the external device is input. Therefore, a user can precisely retrieve the corresponding video data using the summary video information such as the image of the main scene and the synopsis of the video data which are provided according to selection of the retrieving menu.

## Description

The present invention relates to a VOD (video on demand) service system, and more particularly, to a VOD service system that provides video data to an external communication terminal connected to receive the video data.

The term video on demand (VOD) service system generally refers to a communication network service system by which users can receive desired video data at any time. The VOD service system provides a service through a pay TV connected through a wire or a personal communication terminal that is capable of receiving and transmitting wireless data.

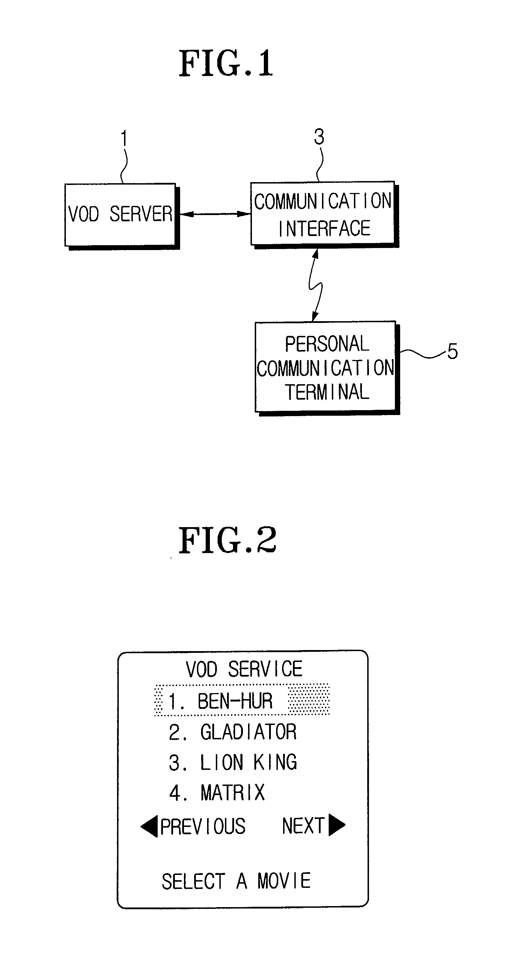

Figure 1 is a schematic block diagram of a conventional VOD service system.

Referring to Figure 1, a conventional VOD service system comprises a VOD server 1 for storing many video data and titles of the video data, and a communication interface 3 which is connected to an external device so as to provide a signal received from the external device to the VOD server 1 and also to transmit the video data input from the VOD server 1 to the external device.

The operation for providing the video data in the VOD service system is as follows. If a signal requesting connection is transmitted from a personal communication terminal 5 to the communication interface 3, the communication interface 3 reads a main page of a site from the VOD server 1 and then transmits the main page to the personal communication terminal 5. Then, if the user selects a VOD service menu included in the main page provided to the personal communication terminal 5, the VOD server 1 provides a title list of the video data to the personal communication terminal 5.

Figure 2 is a view showing a state in which the title list of the video data provided from the VOD server 1 is displayed on an LCD (not shown) of the personal communication terminal 5. Referring to Figure 2, a message "VOD service" showing that a present image is a VOD service image is displayed on the LCD. Then, a title list of some of the video data that can be provided from the VOD server 1 is displayed. In addition, "Previous" and "Next" menus are displayed on the LCD to provide lists of additional titles of the video data that can be provided from the VOD server 1. At a lower portion of the LCD, there is provided a message "Select a movie" to indicate that a user may select one of the video data from the title list of the video data. In the drawing, a selecting cursor is moved to the title "Ben-Hur" selected from the title list by the user. If the user selects the title "Ben-Hur", the VOD server 1 transmits the video data corresponding to the title "Ben-Hur" through the communication interface 3 to the personal communication terminal 5. Meanwhile, the fee for receiving the video data is charged to the user's time points when the personal communication terminal 5 is connected to the VOD server 1, when one of the displayed titles is selected to receive the corresponding video data, or when the VOD server 1 provides the video data corresponding to the selected title.

However, in the VOD service system as described above, the user has to compare only the title list of the video data provided from the VOD server 1 and then select the video data. Therefore, if the video data corresponding to the title selected by the user is not the data that the user wants, the user must waste a lot of time retrieving the video data that the user wants. Further, if the title corresponding to the video data stored in the VOD server 1 is displayed differently from the title of the video data that the user knows, additional time is wasted retrieving the video data that the user wants. Therefore, it is very difficult for the user to decide which title out of the multiple title lists provided from the VOD server 1 corresponds to the video data that the user wants.

In addition, in case the user selects the title list to retrieve the corresponding video data, a charge for selecting the corresponding title is imposed on the user. Therefore, there is a problem that the user has to pay the unnecessary charge.

Therefore, it is an aim of the present invention to provide a VOD service system and method, in which the user can easily retrieve and select a corresponding video data that the user wants.

The present invention provides a system for providing summary video information of video data comprising an editing tool server which makes a video title list for a plurality of video data, and edits the summary video information of each video data corresponding to the video title list and extracts the summary video information according to a requesting signal, a preview encoder which provides a retrieving menu for the video title list to an external device connected to receive the video data, and properly align the summary video information for at least one of the video data on a screen or reprocesses the summary video information to be suitable for streaming thereof when a retrieving operation is requested through the retrieving menu, and a stream server which transmits the extracted video title list and the summary video information to the external device, when an output-requesting signal for the summary video information of the video data extracted from the external device is input.

Preferably, the summary video information comprises an image of a main scene and/or a synopsis for each video data.

Meanwhile, the editing tool server classifies the video data by category. Further, the editing tool server comprises the video data, the video title list corresponding to the video data, and a database for storing the summary video information.

Preferably, the retrieving menu comprises a menu "Retrieving by titles" for performing the retrieving operation through the video title list corresponding to the video data, a menu "Retrieving by category" for performing the retrieving operation by the category, and a menu "Retrieving by keyword" for retrieving the corresponding video title list using a word of the video title list as a keyword.

Also, the present invention provides a method for providing summary video information of video data, comprising the steps of making a video title list for a plurality of video data, and editing the summary video information of each video data corresponding to the video title list and extracting the summary video information according to a requesting signal, providing a retrieving menu for the video title list to an external device so as to retrieve the video data, properly aligning the summary video information for at least one of the video data on a screen, reprocessing the summary video information to be suitable for streaming thereof when a retrieving operation is requested through the retrieving menu, and transmitting the extracted video title list and summary video information to the external device if an output-requesting signal for the summary video information of the video data extracted from the external device is input.

Preferably, the editing step comprises the steps of classifying the video data by category, and extracting and editing the video data, the video title list and the summary video information corresponding to the video data, and then storing the video data, the video title list and the summary video information together with an original image to be suitable for streaming thereof.

Further, the retrieving menu comprises a menu "Retrieving by titles" for performing the retrieving operation through the video title list corresponding to the video data, a menu "Retrieving by category" for performing the retrieving operation by the category, and a menu "Retrieving by keyword" for retrieving the corresponding video title list using a word of the video title list as a keyword.

Further according to the present invention, a retrieving menu for retrieving the desired video data is provided to the personal communication terminal through which the VOD service is received. Therefore, the user can select the proper retrieving fashion according to the user's taste, when the user retrieves the corresponding video data, and the retrieving time for retrieving the corresponding data is reduced. In addition, the user can precisely retrieve the corresponding video data using the summary video information such as the synopsis or images of the main scenes of the video data.

For a better understanding of the invention, and to show how embodiments of the same may be carried into effect, reference will now be made, by way of example, to the accompanying diagrammatic drawings in which:
Figure 1 is a block diagram of a conventional VOD service system;
Figure 2 is a view showing a state that a title list of video data provided from a VOD server of Figure 1 is displayed on an LCD of a personal communication terminal;
Figure 3 is a block diagram of a system for providing summary video information of video data according to an embodiment of the present invention;
Figure 4 is a view of a retrieving menu of the video data provided from a preview encoder and a service table for each retrieving menu;
Figure 5 is a view of a service table retrieved by selecting a menu "Retrieving by category" out of the retrieving menu of Figure 4;
Figure 6 is a view of a service table retrieved by selecting a menu "Keyword retrieving" out of the retrieving menu of Figure 4; and
Figure 7 is a flow chart showing the method for providing the summary video information of the video data according to the present invention.

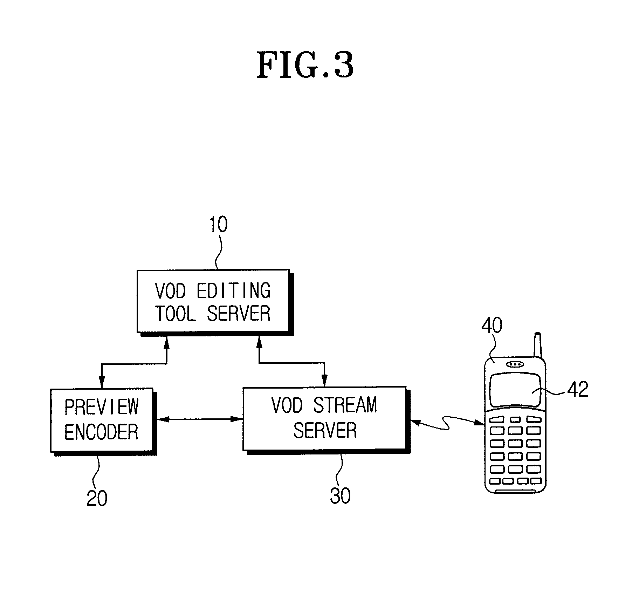

Figure 3 is a block diagram of a system for providing summary video information of video data according to an embodiment of the present invention. Referring to Figure 3, the system for providing summary video information of video data has a VOD editing tool server 10 which makes a video title list of many video data and extracts and edits summary video information according to the video title list, a preview encoder 20 which provides a retrieving menu of the video title list to retrieve video data according to a retrieving condition input from a communication terminal 40 for receiving the video data, and a VOD stream server 30 which transmits the retrieved video title list and the summary video information to the communication terminal 40 when a receipt requesting signal for the summary video information of the retrieved video data is input from the communication terminal 40.

The VOD editing tool server 10 edits the summary video information of each video data based on an image of a main scene and/or a synopsis of the video data. Herein, the image of the main scene includes a moving-picture and a still picture showing the main scene of the original video data. Further, an image extracting operation may be performed by manual editing. However, the image extracting operation is typically performed in an automatic way such as a shot-detecting algorithm, etc. Preferably, the VOD editing tool server 10 classifies the video title list according to a category, i.e., character of the video data when making the video title list.

Preferably, the VOD editing tool server 10 has the video data, the video title list edited from the video data, and a database (not shown) for storing the summary video information. Moreover, the VOD editing tool server 10 extracts the summary video information stored in the database in response to a requesting signal from the personal communication terminal 40, and then provides the information to the preview encoder 20.

Meanwhile, the preview encoder 20 reprocesses the video title and the summary video information extracted by the VOD editing tool server 10 so as to be suitable for streaming thereof according to a condition input through the retrieving menu provided to the personal communication terminal 40, and then transforms the video title and the summary video information into a format proper for displaying on a screen of the personal communication terminal 40. At this time, the retrieving menu provided from the preview encoder 20 includes a retrieving menu by titles, in which a retrieving operation is performed through the video title list corresponding to the video data, a retrieving menu by category, in which the retrieving operation is performed by category according to the character of the video data, and a retrieving menu by keyword in which the corresponding video title list is retrieved using a word of the video title list as a keyword.

The VOD stream server 30 serves as a communication interface of the personal communication terminal 40 with respect to the VOD editing tool server 10 and the preview encoder 20. Further, if the personal communication terminal 40 requests video data, the VOD stream server 30 receives the video data from the VOD editing tool server 10 and then transmits the video data to the personal communication terminal 40.

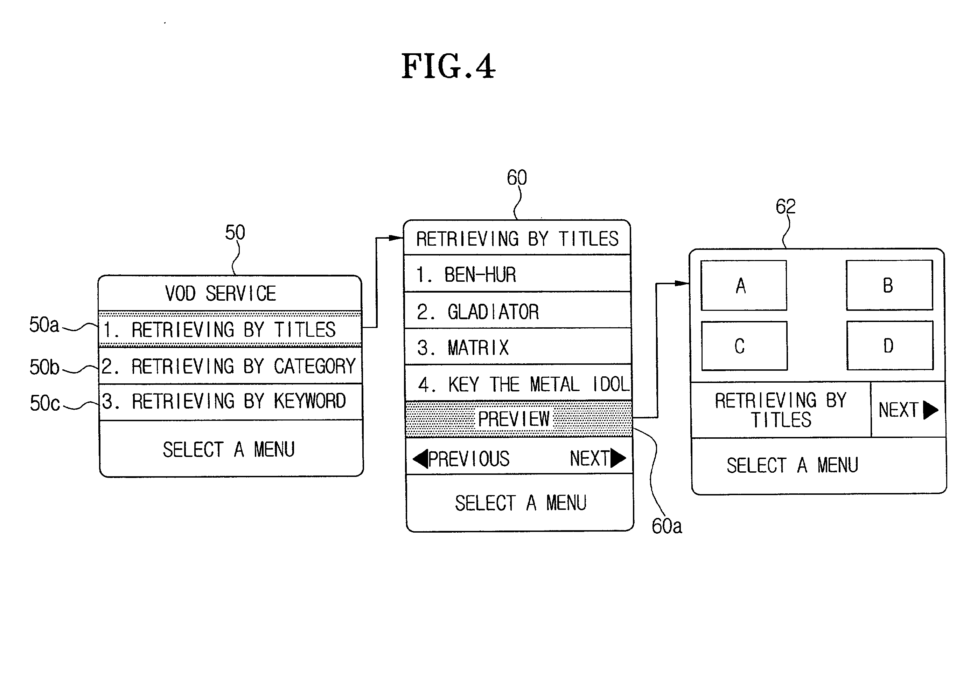

Figure 4 is a view of a retrieving menu of the video data provided from a preview encoder and a service table for each retrieving menu. Referring to Figure 4, first, if the personal communication terminal 40 is connected to the VOD editing tool server 10, the preview encoder 20 provides a retrieving menu 50 of the video data to the personal communication terminal 40. A message informing that a present site is a VOD service site is displayed in the retrieving menu 50. In the drawing, a message "VOD service" is displayed. The retrieving menu 50 has various kinds of retrieving items. The retrieving items of the retrieving menu 50 comprise a menu 50a "Retrieving by titles", a menu 50b "Retrieving by category" and a menu 50c "Retrieving by keyword". Herein, a guiding message is provided to the retrieving items 50a, 50b, and 50c of the retrieving menu 50 so that a user can select one of the retrieving items, that the user wants. For example, the guiding message is "Select a menu" as shown in the drawing.

As shown in Figure 4, a selecting cursor is located at the menu "Retrieving by titles" 50a of the retrieving menu 50. Further, a service table, which is provided when selecting the menu "Retrieving by titles" 50a, is also shown. If the menu "Retrieving by titles" 50a is selected, the preview encoder 20 provides a retrieving-by-titles table 60 to the personal communication terminal 40. The retrieving-by-titles table 60 includes a message informing that a present table is a service table according to the menu "Retrieving by titles" 50a. In addition, in the retrieving-by-titles table 60, there is provided a menu "Previewing" 60a for previewing the selected video title list. The retrieving-by-titles table 60 also has a menu "Previous" for returning to the retrieving menu 50 and a menu "Next" for additionally displaying the video title list which is not displayed on a present page. At this time, the guiding message is also provided to the retrieving-by-titles table 60 so that the user can select a video title out of the displayed video title list, of which the user wants to receive the summary video information.

If the menu "Preview" of the retrieving-by-titles table 60 is selected, the preview encoder 20 transforms a format such as image resolution so that the main scene of the video title list extracted by the VOD editing tool server 10 can be displayed on a single screen. Therefore, in a preview screen image 62, the images A, B, C, and D of the main scenes corresponding to four video titles (Ben-Hur, Gladiator, Matrix and Key The Metal Idol) displayed in the retrieving-by-titles table 60 are displayed on a single screen. The preview screen image 62 includes a menu "Previous" for returning to the retrieving-by-titles table 60 and a menu "Next" for displaying additional previewing images of the video data. Meanwhile, the preview screen image 62 includes the guiding message for guiding selection of the images of the main scenes. If the user selects one image of the main scene displayed on the preview screen image 62, which the user wants to receive, the VOD editing tool server 10 transmits the video data, corresponding to the image of the main scene selected by the user, from the database to the personal communication terminal 40. The user receives all of the services through an LCD 52 of the personal communication terminal 40.

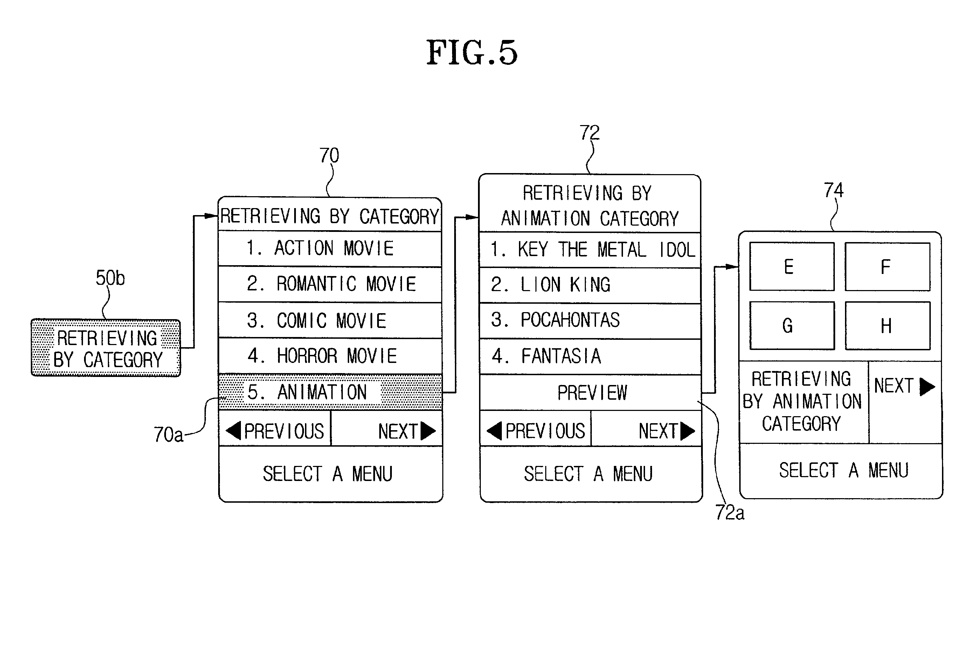

Figure 5 is a view of a service table by selecting a menu "Retrieving by category" out of the retrieving menu of Figure 4. According to the drawing, if the user selects the menu "Retrieving by category" 50b, the preview encoder 20 provides a retrieving-by-category table 70 classified by the character of the video data to the personal communication terminal 40. For example, the retrieving-by-category table 70 includes categories of action movies, romantic movies, comic movies, horror movies, animation, etc. If the user selects a menu "animation" 70a, the preview encoder 20 provides a sub-table 72 for the animation category to the personal communication terminal 40. In the sub-table 72, there are provided a video title list of animation movies (e.g., Key The Metal Idol, Lion King, Pocahontas, and Fantasia) and a menu "Preview" 72a of the displayed video title list. At this time, if the user selects the menu "Preview" 72a, the preview encoder 20 provides a preview screen image 74 to the personal communication terminal 40. In the preview screen image 74, images E, F, G, and H of main scenes corresponding to the video title list (Key The Metal Idol, Lion King, Pocahontas, and Fantasia), which is extracted by the VOD editing tool server 10 and then displayed in the sub-table 72, are displayed on a single screen.

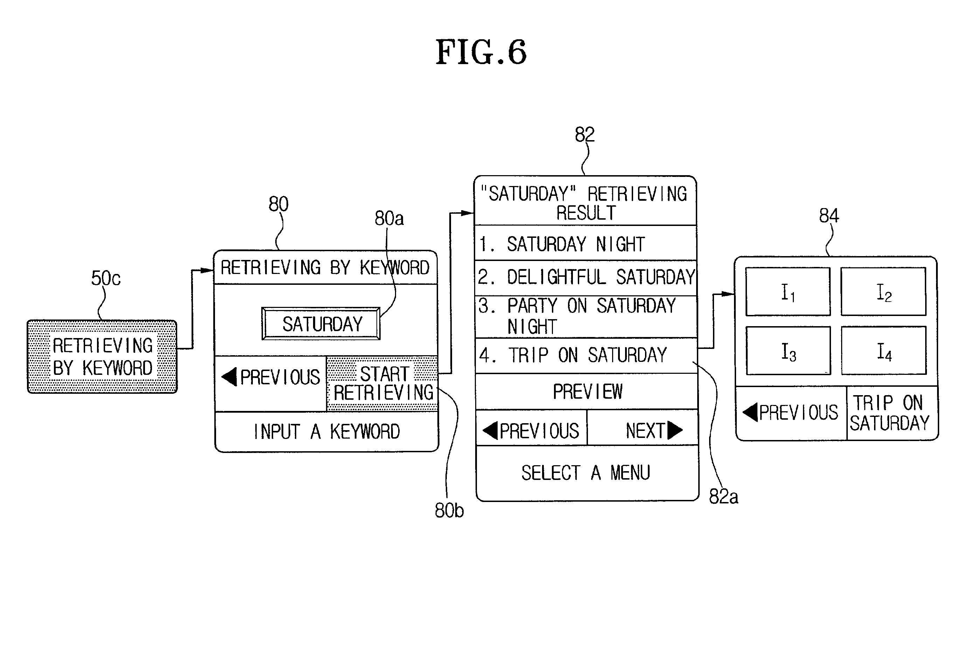

Figure 6 is a view of a service table for a menu "Retrieving by keyword" out of the retrieving menu of Figure 4. According to the drawing, if the user selects the menu "Retrieving by keyword" 50c, the preview encoder 20 provides a retrieving-by-keyword table 80 for retrieving a keyword of the video title to the personal communication terminal 40. The retrieving-by-keyword table 80 includes an input window 80a in which the user inputs the keyword and a menu "Start retrieving" 80b by which the user inputs an instruction for retrieving the input keyword.

According to the drawing, as an example, a word "Saturday" as the keyword is input in the input window 80a. If the user selects the menu "Start retrieving" 80b using the word "Saturday" as the keyword, a list of video titles, which include the word "Saturday", extracted by the VOD editing tool server 10 is displayed in a result table 82. Then, if the user selects a menu "Trip on Saturday" out of the video titles displayed on the result table 82, the VOD editing tool server 10 extracts the summary video information for the menu "Trip on Saturday" from the database. The preview encoder 20 provides a preview screen image 84 to the personal communication terminal 40. In the preview screen image 84, images I₁, I₂, I₃, and I₄ of main scenes for the menu "Trip on Saturday", which is extracted by the VOD editing tool server 10, are displayed on a single screen.

Therefore, it is possible to precisely retrieve the video data that the user wants.

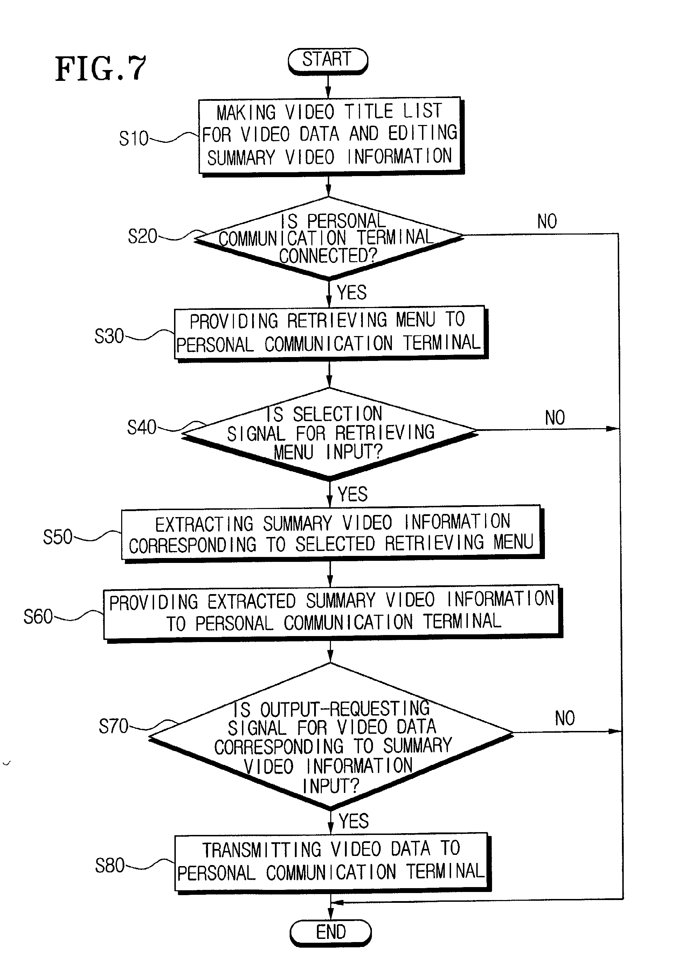

Figure 7 is a flow chart showing the method for providing the summary video information of the video data. In the drawing, first, the VOD editing tool server 10 makes the video title list for the video data stored in the database (S10). Further, the VOD editing tool server 10 performs an operation of editing the summary video information, in which the synopsis and the images of the main scene for each video data are extracted, and classifies the video data by category according to the character of the video data. The video title list, the summary video information and the category information are stored in the database.

Meanwhile, the VOD editing tool server 10 determines whether a connection-requesting signal is received from the personal communication terminal 40 through the VOD stream server 30 (S20). In the step S20, if it is determined that the personal communication terminal 40 is connected, the preview encoder 20 provides the retrieving menu 50 to the personal communication terminal 40 (S30).

The preview encoder 20 determines whether a selecting signal of a corresponding retrieving menu selected out of the retrieving menu 50 in the personal communication terminal 40 by the user is input (S40). In the step S40, if it is determined that the selecting signal of the corresponding retrieving menu is input, the VOD editing tool server 10 properly aligns the summary video information corresponding to the retrieving menu on the screen, and/or reprocesses the summary video information to be suitable for streaming (S50). Meanwhile, the preview encoder 20 transforms the summary video information extracted in the step S50 into a proper format that can be displayed on the screen of the personal communication terminal 40 and then transmits the formatted data to the personal communication terminal 40 (S60).

The preview encoder 20 determines whether an output-requesting signal for the video data corresponding to the certain summary video information provided in the step S60 is input from the personal communication terminal 40 (S70). In the step S70, if it is determined that the output-requesting signal for the video data is input from the personal communication terminal 40, the VOD editing tool server 10 transmits the video data stored in the database through the VOD stream server 30 to the personal communication terminal 40.

Therefore, when the user retrieves the corresponding video data, the user can select a retrieving option according to the user's taste. Further, the retrieving time for retrieving a desired video data is reduced.

According to the present invention as described above, the retrieving menu for retrieving the desired video data is provided to the personal communication terminal through which the VOD service is received, whereby the user can select the proper retrieving option according to the user's taste, when the user retrieves the corresponding video data, and the retrieving time for retrieving the corresponding data is reduced. In addition, the user can precisely retrieve the corresponding video data using the summary video information such as the synopsis or images of the main scenes of the video data.

While the present invention has been described in detail, it should be understood that various changes, substitutions and alterations could be made thereto without departing from the scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system for providing summary video information of video data, comprising:
an editing tool server (10) which makes a video title list for a plurality of video data, and edits the summary video information of each video data corresponding to the video title list and extracts the summary video information according to a requesting signal;
a preview encoder (20) which provides a retrieving menu for the video title list to an external device connected to receive the video data, and properly align the summary video information for at least one of the video data on a screen or reprocesses the summary video information to be suitable for streaming thereof when a retrieving operation is requested through the retrieving menu; and
a stream server (30) which transmits the extracted video title list and the summary video information to the external device, when an output-requesting signal for the summary video information of the video data extracted from the external device is input.

2. The system of claim 1, wherein the summary video information comprises at least one of an image of a main scene and a synopsis, for each video data.

3. The system of claim 1 or 2, wherein the editing tool server (10) classifies the video data by category.

4. The system of claim 1, 2 or 3, wherein the editing tool server (10) comprises the video data, the video title list corresponding to the video data, and a database for storing the summary video information.

5. The system of claim 1, 2, 3 or 4, wherein the retrieving menu comprises at least one of:
a menu "Retrieving by titles" for performing the retrieving operation through the video title list corresponding to the video data;
a menu "Retrieving by category" for performing the retrieving operation by the category; and
a menu "Retrieving by keyword" for retrieving the corresponding video title list using a word of the video title list as a keyword.

6. A method for providing summary video information of video data, comprising the steps of:
making a video title list for a plurality of video data, and editing the summary video information of each video data corresponding to the video title list and extracting the summary video information according to a requesting signal;
providing a retrieving menu for the video title list to an external device so as to retrieve the video data;
properly aligning the summary video information for at least one of the video data on a screen;
reprocessing the summary video information to be suitable for streaming thereof when a retrieving operation is requested through the retrieving menu; and
transmitting the extracted video title list and summary video information to the external device if an output-requesting signal for the summary video information of the video data extracted from the external device is input.

7. The method of claim 6, wherein the summary video information comprises at least one of an image of a main scene and a synopsis, for each video data.

8. The method of claim 6 or 7, wherein the editing step comprises a step of classifying the summary video information by category.

9. The method of claim 6, 7 or 8, further comprising a step of storing the video data, the video title list corresponding to the video data, and the summary video information.

10. The method of claim 6, 7, 8 or 9 wherein the retrieving menu comprises at least one of:
a menu "Retrieving by titles" for performing the retrieving operation through the video title list corresponding to the video data;
a menu "Retrieving by category" for performing the retrieving operation by the category; and
a menu "Retrieving by keyword" for retrieving the corresponding video title list using a word of the video title list as a keyword.
